# EUROPEAN PATENT APPLICATION

(11) **EP 4 801 069 A1**
(43) Date of publication of application: **02.09.2026**
(21) Application number: 25160891.5
(22) Date of filing: 28.02.2025
(51) Int. Cl.: H04W 4/029, H04W 48/16

(54) **WIRELESS TELECOMMUNICATIONS NETWORK AND METHOD OF OPERATING THE SAME BY PROVIDING INFORMATION AND INSTRUCTIONS TO MOBILE CLIENT DEVICE**

(71) Applicant: British Telecommunications Public Limited Company, London E1 8EE (GB)
(72) Inventor: The designation of the inventor has not yet been filed
(74) Representative: British Telecommunications public limited company Intellectual Property Department

(57) **Abstract**

A method of operating a telecommunications network comprising a wireless telecommunications network, having a plurality of access nodes, and a mobile client device, wherein said access nodes are accessible to said mobile client device using a wireless network interface thereof, and the method comprising the steps of: receiving, at the wireless telecommunications network, a travel route for the client device from a first location to a second location, different to the first location; identifying, for the received travel route a set of the plurality of access nodes that are accessible to the mobile client device along the travel route; generating, in dependence upon the received travel route and the identified set of the plurality of access nodes, a Network Availability Plan, NAP, in which said NAP is a timetable and/or a spatial plan indicative of an availability of the identified set of access nodes; communicating the NAP to the mobile client device; and operating the wireless network interface according to the NAP when the mobile client device is travelling along the travel route.

## Description

### Field of Invention

The present invention relates to a wireless telecommunications network, and to a method of operating the same, and more specifically for providing information and instructions to a mobile client device to control operation of a wireless network interface thereof so as to help improve, at least, energy efficiency of the mobile client device and efficient communication with the wireless telecommunications network.

### Background

Networked vehicles such as Unmanned Aerial Vehicles (UAVs) and drones have limited battery life. Battery is typically shared by flight and network communication apparatus. Power efficiency of such vehicles is important to the success of a mission.

Wasted battery power will limit flight time, and communication and other capabilities. From the perspective of an operator of such vehicles, battery power may be inefficiently used when searching for unavailable networks and when re-transmitting data due to congestion or high error rates.

Correspondingly, from the perspective of a wireless telecommunications network operator, network efficiency may be affected by suboptimal technology selection by client devices, which may have a potential impact on other customers.

Accordingly, there is a need to ameliorate at least some of the aforementioned problems.

### Statements of Invention

According to a first aspect of the present invention, there is provided: a method of operating a telecommunications network comprising a wireless telecommunications network, having a plurality of access nodes, and a mobile client device, wherein said access nodes are accessible to said mobile client device using a wireless network interface thereof, and the method comprising the steps of: receiving, at the wireless telecommunications network, a travel route for the client device from a first location to a second location, different to the first location; identifying, for the received travel route a set of the plurality of access nodes that are accessible to the mobile client device along the travel route; generating, in dependence upon the received travel route and the identified set of the plurality of access nodes, a Network Availability Plan, NAP, in which said NAP is a timetable and/or a spatial plan indicative of an availability of the identified set of access nodes; communicating the NAP to the mobile client device; and operating the wireless network interface according to the NAP when the mobile client device is travelling along the travel route. Preferably, the step of operating the wireless network interface according to the NAP comprises the mobile client device determining a current location and/or time, assessing whether said current location and/or time maps to a location and/or time within the timetable and/or spatial plan, and in response to identifying such, determining a corresponding availability of the network, and operating the wireless network interface according to the determined corresponding availability. Preferably, the NAP is generated by the wireless telecommunications network, and more preferably without input from the mobile client device regarding the wireless telecommunications network (e.g. without measurements thereof by the mobile client device), and optionally solely from information generated and/or sensed by the wireless telecommunications network.

Preferably, operating the wireless network interface according to the NAP comprises at least one of, at a time and/or location specified by the NAP: activating and/or de-activating the wireless network interface; initiating and/or preventing an advertisement and/or attachment request by the wireless network interface; and/or increasing and/or decreasing power consumption by the wireless network interface. Preferably, the NAP comprise a set of instructions for activating and deactivating the network interface based on the timetable and/or a location-based trigger. Preferably, the mobile client device performs said steps without first scanning or probing the wireless telecommunications network.

Preferably, the method further comprises the steps of, at the wireless telecommunications network: receiving the first location and the second location; and generating the travel route using the received first location and the received second location.

Preferably, the travel route is generated using at least one of: network availability information; network service information; network performance information; environmental conditions; user preferences; and/or mission-driven connectivity requirements. Preferably, the network availability information comprises at least one of: wireless coverage area; transmit power of the plurality of access nodes; network technology and/or service availability; planned downtime of the plurality of access nodes. Preferably, the network service information comprises at least one of: availability of network slicing, a network technology or protocol, and network capabilities, such as encryption and security. Preferably, the network performance information comprises at least one of: bandwidth, jitter, latency and reliability. Preferably, the environmental conditions comprises at least one of: topology, radio propagation models and weather conditions. Preferably, the user preferences comprises at least one of: cost, travel route preferences, and preferences as to network availability; network services; network performance; and/or mission-driven connectivity requirements. Preferably, the mission-driven connectivity requirements comprise at least one of: battery efficiency and safeguarding, covertness, reliability, quality, and operation of specific tasks by the mobile client device at a particular time and/or location.

Preferably, the travel route is generated so as to maximise availability of the wireless telecommunications network to the mobile client device.

Preferably, the travel route is generated so as to minimise battery use of the mobile client device. Preferably, the route is generated so as to minimise a travel parameter for travel by the client device. Preferably, the travel parameter is minimised within a respective tolerable threshold. Preferably, the tolerable threshold is variable, and is adjusted in dependence upon a property of the: client device; first location; and/or second location. Preferably, the property of the client device comprises: a unique identity of the client device; a type of client device; data generated by the client device; and/or contextual use information for the client device. Preferably, the method further comprises the steps of: determining, for each of the access nodes, a radio characteristic; and determining the travel route in dependence upon the determined radio characteristic so as to ensure access to the network by the client device along the travel route. Preferably, the radio characteristic is signal strength and/or frequency band. Preferably, the method further comprises the step of updating, at the wireless telecommunications network, the NAP and/or travel route and the NAP whilst the client device is travelling; communicating the updated NAP and/or the updated travel route and the NAP to the client device whilst the client device is travelling; and operating the network interface of the client device according to the updated NAP, and/or rerouting the client device according to the updated travel route. Preferably, the step of generating the travel route is performed within, and optionally only within, a core of the wireless telecommunications network and/or within at least one of the plurality of access nodes.

Preferably, the method further comprises a step of reconfiguring at least one of the plurality of access nodes in co-ordination with a time specified within the NAP for informing operation of the wireless network interface for connecting to said at least one access node. Preferably, the configuration is synchronised to be in effect for a time that the NAP specifies availability for the mobile client device to connect to the at least one access node. Preferably, the configuration is undone in synchronisation with a subsequent time that the NAP specifies unavailability for the mobile client device to connect to the at least one access node.

Preferably, the NAP is generated and communicated to the mobile client device prior to said device commencing travel along the travel route. Preferably, the NAP is provided to the mobile client device at the first location. Optionally, the NAP is static once communicated to the mobile client device, or is dynamic based on an update from one of the sets of access nodes.

According to another aspect of the invention, there is provided a computer-readable carrier medium comprising a computer program, which, when the computer program is executed by a computer, causes the computer to carry out any of the methods as described above.

According to yet another aspect of the invention, there is provided a telecommunications network, comprising a: wireless telecommunications network having a plurality of access nodes for communicating with a mobile client device via a wireless network interface thereof; and controller configured to: receive, at the wireless telecommunications network, a travel route for the client device from a first location to a second location, different to the first location; identify, for the received travel route a set of the plurality of access nodes that are accessible to the mobile client device along the travel route; generate, in dependence upon the received travel route and the identified set of the plurality of access nodes, a Network Availability Plan, NAP, in which said NAP is a timetable and/or a spatial plan indicative of an availability for the identified set of access nodes; and communicate the NAP to the mobile client device, thereby for the mobile client device to operate the wireless network interface according to the NAP when the mobile client device is travelling along the travel route.

Optionally, the client device is provided as a part of a mobile device and/or vehicle. Optionally, the vehicle is an autonomous vehicle or an unmanned vehicle. Optionally, the vehicle is an aerial, space, marine and/or ground vehicle. Preferably, the travel route comprises a sequence of waypoints, coordinates, or geographical locations, connected by segments representing an intended path of travel. The segments may be defined by straight lines, curves, and/or complex trajectories, may be in 2D or 3D space, and may be constrained (e.g. to physical infrastructure, such as roads) and/or may unconstrained. Optionally, a travel route further incorporates directional information, such as headings, altitudes, and speeds, associated with each segment or waypoint. For example, a travel route may include a pre-programmed path defined by GPS coordinates. When generated, the travel route may be optimised for various criteria, such as shortest distance, minimum energy consumption, and/or maximum safety.

The above summary is not intended to describe each illustrated embodiment or every implementation of the subject matter hereof. The invention includes any novel aspects described and/or illustrated herein. The invention also extends to methods and/or apparatus substantially as herein described and/or as illustrated with reference to the accompanying drawings. The invention is also provided as a computer program and/or a computer program product for carrying out any of the methods described herein and/or for embodying any of the apparatus features described herein, and a computer-readable medium storing thereon a program for carrying out any of the methods and/or for embodying any of the apparatus features described herein. Features described as being implemented in hardware may alternatively be implemented in software, and vice versa.

It should be understood that the individual operations used in the methods of the present teachings may be performed in any order and/or simultaneously, as long as the teaching remains operable. Furthermore, it should be understood that the apparatus and methods of the present teachings can include any number, or all, of the described embodiments, as long as the teaching remains operable.

Any apparatus feature may also be provided as a corresponding step of a method, and vice versa. As used herein, means plus function features may alternatively be expressed in terms of their corresponding structure, for example as a suitably-programmed processor.

Any feature in one aspect of the invention may be applied, in any appropriate combination, to other aspects of the invention. Any, some and/or all features in one aspect can be applied to any, some and/or all features in any other aspect, in any appropriate combination. Particular combinations of the various features described and defined in any aspects of the invention can be implemented and/or supplied and/or used independently.

As used throughout, the word 'or' can be interpreted in the exclusive and/or inclusive sense, unless otherwise specified.

The invention extends to a wireless telecommunications network, and a method of operating the same, as described herein and/or substantially as illustrated with reference to the accompanying drawings. The present invention is now described, purely by way of example, with reference to the accompanying diagrammatic drawings, in which:
Figure 1 shows a telecommunications network; and
Figure 2 shows a process of operating the telecommunications network.

While various embodiments are amenable to various modifications and alternative forms, specifics thereof have been shown by way of example in the drawings and will be described in detail. It should be understood, however, that the intention is not to limit the claimed inventions to the particular embodiments described. On the contrary, the intention is to cover all modifications, equivalents, and alternatives falling within the spirit and scope of the subject matter as defined by, at least, the claims.

### Specific Description

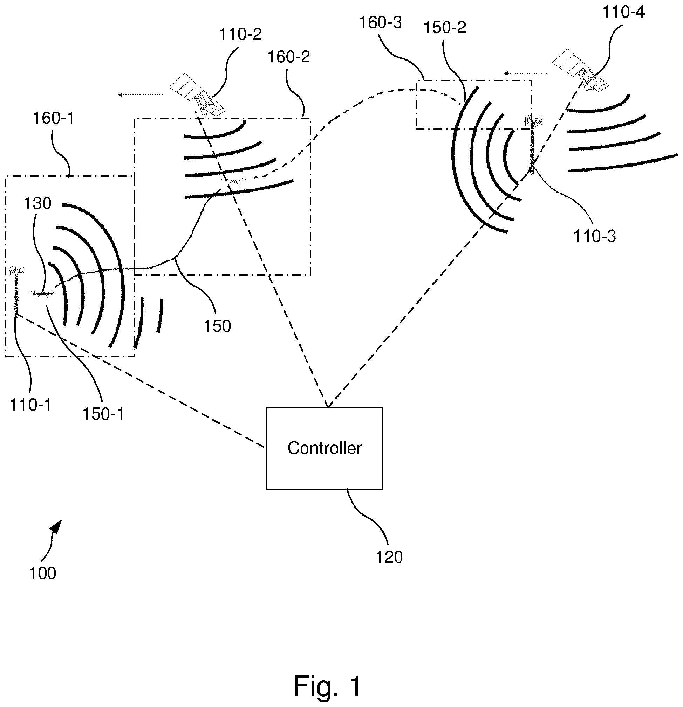

Figure 1 shows a telecommunications network 100 comprising a: wireless telecommunications network; plurality of access nodes 110; controller 120; and mobile client device 130.

The plurality of access nodes 110 - comprising first 110-1, second 110-2, third 110-3 and fourth 110-4 access nodes - are in the form of radio access nodes of the wireless telecommunications network that are configured to serve the mobile client device 130 to provide telecommunications services. The first 110-1 and third 110-3 access nodes 110 are, for example, in the form of a fixed base station *(e.g.* an eNodeB, femtocell, picocell, *etc.),* whereas the second 110-2 and fourth 110-4 access nodes are in the form of a moving base station (e.g. a telecommunications satellite).

The wireless telecommunications network is in the form of, at least, a cellular telecommunications network (e.g. operating using 3G, 4G and/or 5G technologies) and a satellite telecommunications network.

The controller 120 is provided as a part of the wireless telecommunications network, and, as described in more detail below, said controller is configured to process information from the wireless telecommunications network, and responsively to generate prescriptive information and instructions for controlling connectivity of the mobile client device 130 to the wireless telecommunications network via the plurality of access nodes 110.

Although not shown in Figure 1 for conciseness, it will be appreciated by the person skilled in the art that the wireless telecommunications network comprises additional constituents to those described above and shown in said figure, such as, at least, a core network (e.g. in turn comprising a User Plane Function, UPF, Session Management Function, SMF, Mobility Management Entity, MME, and/or a Serving Gateway, SGW), and appropriate backhaul communication links. In one example, the controller is provided, at least in part, within the core network.

The mobile client device 130 is in the form of User Equipment (UE) that is provided as part of a vehicle. The UE is capable of wirelessly communicating with the plurality of access nodes 110 via a wireless network interface *(e.g.* comprising an antenna, modem and processor, *etc.)* that forms a part of the UE. The vehicle is, for example, in the form of a manned or an Autonomous Vehicle (AV), such as a ground-, marine, air- *(e.g.* a UAV) or space-based vehicle. In one specific example, the vehicle is in the form of a drone. Yet more specifically, the vehicle is in the form of a: reconnaissance, surveillance, observation, or patrol vehicle; delivery, cargo or transport vehicle, including for personnel transport; or an agricultural vehicle, such as a harvester, tiller, or fertiliser vehicle.

The mobile client device 130 is configured to travel, via a travel route 150, from a first location 150-1 to a second location 150-2 (e.g. defined by vectors, geographical co-ordinates, and/or addresses). For example, the first location is a starting point of the mobile client device, whereas the second location is an intended endpoint for the mobile client device.

As described in more detail below, the mobile client device 130 is configured to operate the wireless network interface on a prescribed basis using a schedule (or a "timetable") and/or geographic information (or a "spatial plan") provided by the controller 120 as to availability of the wireless telecommunications network along the travel route 150.

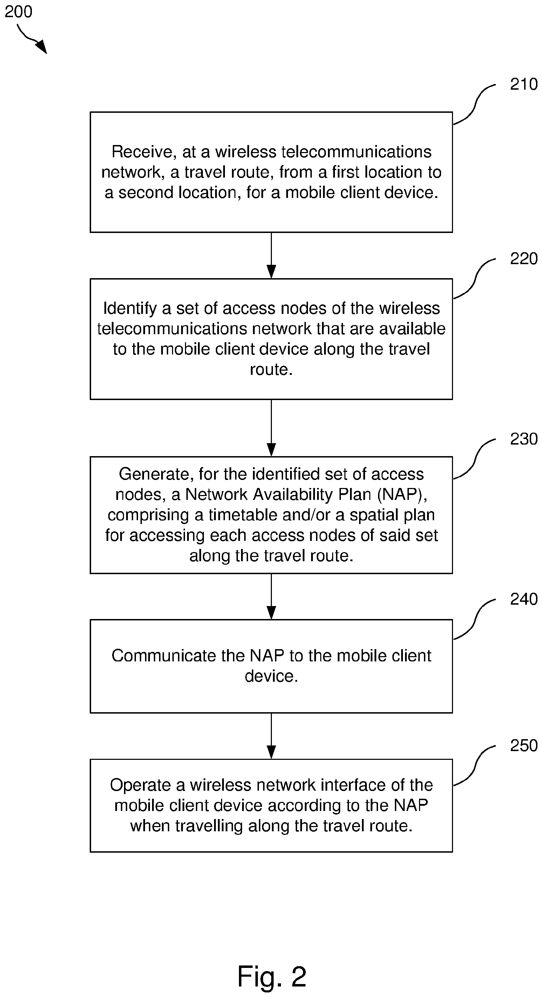

Figure 2 shows a process 200 for operating the telecommunications network 100.

At a first step 210, the wireless telecommunications network receives, at the controller 120, the travel route 150 (*i.e.* from the first location 150-1 to the second location 150-2) for the mobile client device 130.

In one example, the travel route 150 is communicated to the controller 120 from the mobile client device 130 or from another entity (such as from a control platform for, or operator of, the mobile client device).

In another example, the travel route 150 is determined by the controller 120 based on the first location 150-1 *(e.g.* as received, or sensed, by the wireless telecommunications network) and the second location 150-2 (e.g. as received, or generated, by the wireless telecommunications network). In this case, the controller is configured to generate the travel route based on optimising specified parameters for the mobile client device. For example, the specified parameters may include:
- travel parameters *(e.g.* a shortest distance, quickest route, and/or safest route, *etc.);*
- network and service availability (*e.g.* maintaining a minimum signal strength, and/or ensuring continuous connectivity and/or access to data, voice, network slices, *etc.);*
- network performance *(e.g.* latency, jitter, bandwidth, congestion, *etc.);*
- power demands *(e.g.* optimising battery usage, minimising power consumption, *etc.);*
- environmental conditions (*e.g.* topology and/or weather, especially as affecting network connectivity, such obstacles (*e.g.* buildings, mountains, and clouds/fog), or avoiding areas with extreme weather and/or hazardous conditions);
- user preferences (e.g. preferred routes and/or constraints for any of the aforementioned); and/or
- mission-driven connectivity requirements (*e.g.* any of the aforementioned within a specific area or time period indicated by a mission, or objective, for the mobile client device, *e.g.* an URLLC for video streaming within a specific reconnaissance area, or wireless network interface deactivation for covertness).

Regardless of the manner in which the travel route 150 is received (including generated) by the wireless telecommunications network, once said travel route has been received, at a next step 220, the controller 120 performs processing to identify a set of the plurality of access nodes 110 that provide coverage for the mobile client device 130 along the travel route (*e.g.* by using propagation models, drive tests, user data, and/or base station location and/or configuration data).

At a next step 230, having identified the set of access nodes 110, the controller 120 generates, for said set, a Network Availability Plan (NAP) for the mobile client device 130 and the travel route 150. The NAP comprises a schedule and/or spatial plan for prescriptively informing operation of the wireless network interface of the mobile client device 130 based on availability of the wireless telecommunications network, as determined by said network, thereby obviating a need for the mobile client device to make network connection measurements and determinations in flight. That is, the NAP is a pre-defined routine, generated by the wireless telecommunications network, for instructing operation of the wireless network interface, principally to improve power and/or communication efficiency and efficacy, along the travel route.

For example, the NAP identifies the set of access nodes 110, and provides time periods during which each access node is available and/or is unavailable (including an extent of availability, such as network access and/or services availability service, and/or performance parameters), and/or geographic regions (*e.g.* co-ordinates or distance along the travel route) of coverage and/or an absence of coverage (*e.g.* due to planned or anticipated downtime or congestion, and/or obstruction). In turn, the periods and/or geographic regions effectively provide a procedure for informing how the mobile client device is to operate the wireless network interface based on when and/or where (and to what extent) the wireless telecommunications network is available.

In a more specific example, the NAP specifies that the:
- first access node 110-1 is available at all times within a first defined region 160-1, covering the first location 150-1;
- second access node 110-2 is only available between times *t₁* and *t₂,* in a second defined region 160-2 covering a portion of the travel route 150;
- third access node 110-3 is only available between times *t₃* and *t₄,* in a third defined region 160-3 covering the second location 150-2;
- the fourth access node 110-4 is only available between times *t₄* and *t₅,* in the third defined region 160-3; and
- first 160-1 and second 160-2 defined regions are mutually contiguous, but nonoverlapping, and the third defined region 160-3 is non-contiguous with the first and second defined regions, and wherein all of said regions 160 only provide partial coverage of the entire travel route 150.

At a next step 240, the NAP is communicated to the mobile client device 130. In one example, this step is performed prior to the mobile client device embarking along the travel route 150, and for example whilst said device is at the first location 150-1. In this way, a full set of instructions for improving, at least, efficiency of operation of the wireless network interface is provided to the mobile client device upfront, and therefore without requiring ongoing communication with, or probing of, the wireless telecommunications network.

At a next step 250, upon commencing travel along the travel route 150, the mobile client device 130 operates the wireless network interface in dependence upon the NAP, and bypassing (at least initially) conventional network connectivity rules and routines (*e.g.* according to standards), including network scanning, probing and negotiation, and instead performing attachment requests based on information within the NAP (e.g. connecting to an identified access node at a given location or time).

For example, the mobile client device 130 uses the NAP as a schedule or spatial map for triggering switching between access nodes 110 along the travel route 150. Persisting with the example provided above, the mobile client device 130 attempts - bypassing conventional network connectivity routines - to switch from the first access node 110-1 to the second access node 110-2 when the mobile client device is at the boundary between the (contiguous) first 160-1 and second 160-2 defined regions (which the mobile client device is available to determine using known geo-location techniques, such as GPS or inertial navigation), and when the mobile client device enters the second defined region between times *t₁* and *t₂.*

Additionally, or alternatively, the mobile client device 130 uses the NAP as a schedule or spatial map to activate or deactivate the wireless network interface when the NAP indicates gaps in network coverage. Persisting with the example provided above, the mobile client device activates and deactivates the wireless network interface when: the mobile client device enters the second defined region 160-2 outside of the period between times *t₁* and *t₂*; is between the second 160-2 and third defined regions 160-3; and is in the third defined region 160-3 outside of the periods between *t₃* and *t₄,* and between *t₄* and *t₅.* In this way, the mobile client device 130 is capable of saving battery when the NAP indicates that no network connectivity is available. Additionally, efficiency and efficacy of overhead communications with the wireless telecommunications network may be improved as the mobile client device only attempts connectivity when such connectivity is likely available (as informed by the NAP, which is network-generated), thereby reducing the risk of ineffective transmissions.

### Alternatives and Modifications

In an alternative, the Network Access Point (NAP) additionally provides comprehensive information for connecting to a given access node at a specific time and location. For example, this information may include communication channel *(e.g.* band, Channel, frequency, *etc.),* flag *(e.g.* priority or emergency access), key *(e.g.* encryption / authentication key), network slice ID *(e.g.* slice for eMBB, URLLC, *etc.),* and other relevant parameters such as Quality of Service (QoS) indicators, access control lists, and handover instructions.

In the aforementioned, the network 100 is generally shown and described as a cellular and satellite telecommunications network. However, the wireless telecommunications network 100 is available to comprise any kind of wireless telecommunications networks, and for example a cellular telecommunications network with a converged wireless local area network (*e.g.* Wi-Fi) and/or a HetNet.

It will be appreciated that the NAP is available to take any form of information that is capable of conveying to the mobile client device 130 times, period, locations and/or regions when and where the wireless telecommunications network, and specific access nodes 110 thereof, are, and are not, available, thereby to prescribe a schema for more efficient and effective network connectivity.

In an alternative, the wireless telecommunications network is reconfigured to adapt said network to the specified parameters of the mobile client device in synchronicity with the NAP. For example, an access node is activated only whilst the NAP indicates to the mobile client device that said access node is available.

In one embodiment, the system and/or its components or subsystems can include computing devices, microprocessors, modules and other computer or computing devices, which can be any programmable device that accepts digital data as input, is configured to process the input according to instructions or algorithms, and provides results as outputs. In one embodiment, computing and other such devices discussed herein can be, comprise, contain or be coupled to a Central Processing Unit (CPU) configured to carry out the instructions of a computer program. Computing and other such devices discussed herein are therefore configured to perform basic arithmetical, logical, and input/output operations.

Computing and other devices discussed herein can include memory. Memory can comprise volatile or non-volatile memory as required by the coupled computing device or processor to not only provide space to execute the instructions or algorithms, but to provide the space to store the instructions themselves. In one embodiment, volatile memory can include random access memory (RAM), dynamic random access memory (DRAM), or static random access memory (SRAM), for example. In one embodiment, non-volatile memory can include read-only memory, flash memory, ferroelectric RAM, hard disk, floppy disk, magnetic tape, or optical disc storage, for example. The foregoing lists in no way limit the type of memory that can be used, as these embodiments are given only by way of example and are not intended to limit the scope of the disclosure.

In one embodiment, the system or components thereof can comprise or include various modules or engines, each of which is constructed, programmed, configured, or otherwise adapted to autonomously carry out a function or set of functions. The term "engine" as used herein is defined as a real-world device, component, or arrangement of components implemented using hardware, such as by an application specific integrated circuit (ASIC) or field programmable gate array (FPGA), for example, or as a combination of hardware and software, such as by a microprocessor system and a set of program instructions that adapt the engine to implement the particular functionality, which (while being executed) transform the microprocessor system into a special-purpose device. An engine can also be implemented as a combination of the two, with certain functions facilitated by hardware alone, and other functions facilitated by a combination of hardware and software. In certain implementations, at least a portion, and in some cases, all, of an engine can be executed on the processor(s) of one or more computing platforms that are made up of hardware (*e.g.,* one or more processors, data storage devices such as memory or drive storage, input/output facilities such as network interface devices, video devices, keyboard, mouse or touchscreen devices, etc.) that execute an operating system, system programs, and application programs, while also implementing the engine using multitasking, multithreading, distributed (e.g., cluster, peer-peer, cloud, etc.) processing where appropriate, or other such techniques.

Accordingly, each engine can be realized in a variety of physically realizable configurations, and should generally not be limited to any particular implementation exemplified herein, unless such limitations are expressly called out. In addition, an engine can itself be composed of more than one sub-engines, each of which can be regarded as an engine in its own right. Moreover, in the embodiments described herein, each of the various engines corresponds to a defined autonomous functionality; however, it should be understood that in other contemplated embodiments, each functionality can be distributed to more than one engine. Likewise, in other contemplated embodiments, multiple defined functionalities may be implemented by a single engine that performs those multiple functions, possibly alongside other functions, or distributed differently among a set of engines than specifically illustrated in the examples herein.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognise that embodiments may comprise fewer features than illustrated in any individual embodiment described above. The embodiments described herein are not meant to be an exhaustive presentation of the ways in which the various features may be combined. Accordingly, the embodiments are not mutually exclusive combinations of features; rather, embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted. Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended. Furthermore, it is intended also to include features of a claim in any other independent claim even if this claim is not directly made dependent to the independent claim.

Moreover, reference in the specification to "one embodiment," "an embodiment," or "some embodiments" means that a particular feature, structure, or characteristic, described in connection with the embodiment, is included in at least one embodiment of the teaching. The appearances of the phrase "in one embodiment" in various places in the specification are not necessarily all referring to the same embodiment.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

Each feature disclosed herein, and (where appropriate) as part of the claims and drawings may be provided independently or in any appropriate combination.

Any reference numerals appearing in the claims are for illustration only and shall not limit the scope of the claims.

## Claims

1. A method of operating a telecommunications network comprising a wireless telecommunications network, having a plurality of access nodes, and a mobile client device, wherein said access nodes are accessible to said mobile client device using a wireless network interface thereof, and the method comprising the steps of:
receiving, at the wireless telecommunications network, a travel route for the client device from a first location to a second location, different to the first location;
identifying, for the received travel route a set of the plurality of access nodes that are accessible to the mobile client device along the travel route;
generating, in dependence upon the received travel route and the identified set of the plurality of access nodes, a Network Availability Plan, NAP, in which said NAP is a timetable and/or a spatial plan indicative of an availability of the identified set of access nodes;
communicating the NAP to the mobile client device; and
operating the wireless network interface according to the NAP when the mobile client device is travelling along the travel route.

2. A method according to Claim 1, wherein operating the wireless network interface according to the NAP comprises at least one of, at a time and/or location specified by the NAP:
activating and/or de-activating the wireless network interface;
initiating and/or preventing an advertisement and/or attachment request by the wireless network interface; and/or
increasing and/or decreasing power consumption by the wireless network interface.

3. A method according to Claim 1 or 2, further comprising the steps of, at the wireless telecommunications network:
receiving the first location and the second location; and
generating the travel route using the received first location and the received second location.

4. A method according to Claim 3, wherein the travel route is generated using at least one of:
network availability information; network service information; network performance information; environmental conditions; user preferences; and/or mission-driven connectivity requirements.

5. A method according to Claim 3 or 4, wherein the travel route is generated so as to maximise availability of the wireless telecommunications network to the mobile client device.

6. A method according to any 3 to 5, wherein the travel route is generated so as to minimise battery use of the mobile client device.

7. A method according to any preceding claim, further comprising a step of reconfiguring at least one of the plurality of access nodes in co-ordination with a time specified within the NAP for informing operation of the wireless network interface for connecting to said at least one access node.

8. A method according to any preceding claim, wherein the NAP is generated and communicated to the mobile client device prior to said device commencing travel along the travel route.

9. A computer-readable carrier medium comprising a computer program, which, when the computer program is executed by a computer, causes the computer to carry out the steps of any one of the preceding claims.

10. A telecommunications network, comprising a:
wireless telecommunications network having a plurality of access nodes for communicating with a mobile client device via a wireless network interface thereof; and
controller configured to:
receive, at the wireless telecommunications network, a travel route for the client device from a first location to a second location, different to the first location;
identify, for the received travel route a set of the plurality of access nodes that are accessible to the mobile client device along the travel route;
generate, in dependence upon the received travel route and the identified set of the plurality of access nodes, a Network Availability Plan, NAP, in which said NAP is a timetable and/or a spatial plan indicative of an availability for the identified set of access nodes; and
communicate the NAP to the mobile client device, thereby for the mobile client device to operate the wireless network interface according to the NAP when the mobile client device is travelling along the travel route.
